# DEMANDE DE BREVET EUROPEEN

(11) **EP 4 556 405 A1**
(43) Date de publication de la demande: **21.05.2025**
(21) Numéro de dépôt: 24209811.9
(22) Date de dépôt: 30.10.2024
(51) Int. Cl.: B65G 1/04, B65G 1/06, B65G 1/137

(54) **SYSTÈME DE PRÉPARATION DE COMMANDE, ET PROCÉDÉ METTANT EN OEUVRE LE SYSTÈME**

(30) Priorité: 16.11.2023 FR 2312548
(71) Demandeur: Exotec Product France, 59170 Croix (FR)
(72) Inventeur: MOULIN, Romain, 59800 LILLE (FR); HEITZ, Renaud, 59650 VILLENEUVE D'ASCQ (FR)
(74) Mandataire: Plasseraud IP

(57) **Abrégé**

La présente divulgation est relative à un système de préparation de commande comprenant dans un entrepôt :
une pluralité de racks (Ra) chacun configuré pour recevoir des unités de stockage (U) destinées pour des articles, les racks agencés suivant une pluralité de plans verticaux,
au moins une zone de préparation de commande (PC) agencée à distance des racks,
une installation de convoyage configurée pour acheminer une ou plusieurs unités de stockage reçue(s) dans les racks jusqu'à ladite au moins une zone de préparation de commande, suivant un premier sens d'acheminement, ou inversement pour acheminer une ou plusieurs unités de stockage depuis la zone de préparation de commande jusqu'aux racks dans un second sens d'acheminement, ladite installation de convoyage comprenant successivement, suivant le premier sens, trois systèmes de convoyage (CV1, CV2, CV3), comprenant des navettes à déplacement horizontal, un ascenseur à déplacement vertical en bout de rack, et des chariots autoguidés circulant sur une surface horizontale telle que le sol ou une table de roulement

## Description

La présente divulgation est relative à un système de préparation de commande comprenant dans un entrepôt, un ensemble de racks de stockage recevant des unités de stockage pour des articles, une ou plusieurs stations de préparation de commande , et une installation de convoyage configurée pour acheminer une ou plusieurs unités de stockage reçue(s) stockée(s) dans les racks de stockage jusqu'à ladite au moins une zone de préparation de commande, suivant un premier sens d'acheminement, ou inversement pour acheminer une ou plusieurs unités de stockage depuis la zone de préparation de commande jusqu'aux racks de stockage, dans un second sens d'acheminement.

La présente divulgation est encore relative à un procédé de préparation de commande mettant en oeuvre le système de préparation de commande selon la présente divulgation.

### Domaine technique

La présente divulgation relève du domaine général des systèmes automatisés de stockage et de récupération connu par la personne du métier sous l'acronyme ASRS.

### Technique antérieure

De nombreuses solutions de solutions ASRS existent et sont exploitées.

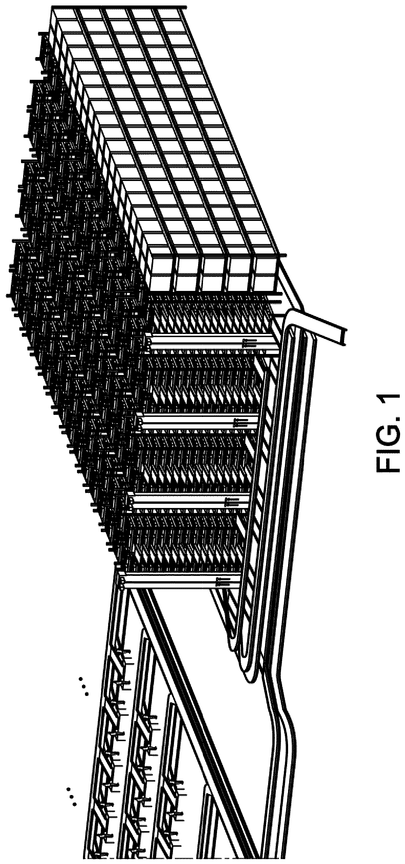

Une des solutions connues consiste en un ensemble de racks de stockage, reposant sur un sol, s'étendant suivant des plans verticaux, les racks séparés deux à deux par des allées de rayonnage respectives, comme illustrée à la figure 1. Les racks de stockage reçoivent dans leurs rayonnages des unités de stockage, typiquement des conteneurs tels que bacs ou plateaux, les unités de stockage étant stockées et réparties suivant la longueur du rack, suivant l'allée de rayonnage, mais encore réparties de manière superposée l'une par rapport à l'autre suivant la hauteur du rack.

Des stations de préparation de commande sont agencées au sol, à distance des racks de stockage, et sont configurées pour recevoir les unités de stockage contenant les articles pour la préparation d'une commande, les unités de stockage contenant les articles, acheminées par une installation de convoyage comprenant plusieurs systèmes de convoyage automatisés, successifs.

Les systèmes de convoyage de cette solution comportent, selon un premier sens d'acheminement des unités de stockage depuis le rack de stockage jusqu'aux stations de préparation de commande, respectivement :
- un premier système de convoyage disposé dans les allées de rayonnage, comportant des premiers dispositifs de convoyage indépendants les uns des autres pour l'acheminement horizontal d'unités de stockage le long de ladite allée de rayonnage, les dispositifs de convoyage travaillant respectivement suivant plusieurs hauteurs du rack de stockage, guidés par des rails horizontaux,
- un deuxième système de convoyage, typiquement agencé en bout de chaque allée de rayonnage comprenant au moins un deuxième dispositif de convoyage, guidé par des rails verticaux, configuré pour l'acheminement vertical d'unités de stockages, depuis le premier système de convoyage, jusqu'à un troisième système de convoyage suivant le premier sens d'acheminement,
- le troisième système de convoyage qui comporte, de manière notable un ensemble de convoyeurs physiques, typiquement à rouleaux, ancrés au sol, serpentant de manière continue depuis la base de deuxièmes dispositifs de convoyage, jusqu'aux stations de préparations de commande.

Dans un langage plus commun, le premier système de convoyage s'apparente à des "navettes". Ces "navettes" sont des véhicules autoguidés équipés de moyens de roulement, telles que des roues, et aptes à circuler sur des rails. Les rails sont positionnés dans les allées, à différents niveaux du rack. Lesdites "navettes" disposent également de moyen de préhension des bacs ou des plateaux qui sont situés dans chacune des alvéoles du rack. Ce sont des moyens de préhension latéraux, qui permettent de venir charger ou décharger de la navette, des bacs ou des containers qu'ils viennent saisir sur les côtés de la navette.

Le troisième système de convoyage s'apparente à "une table de transfert". Il s'agit de tables qui, au moyen de dispositifs mécaniques tels que des rouleaux, des bandes, permettent de faire transiter des plateaux ou des bacs, d'un point à l'autre de l'entrepôt. Le deuxième système de convoyage s'apparente à un "ascenseur". Il est situé à l'extrémité des racks. Il a pour fonction essentielle de faire monter du sol à un étage du rack, ou de faire descendre d'un étage du rack au sol, un plateau ou un bac. Il est apte à coopérer, à chaque étage du rack, avec le premier système de convoyage c'est-à-dire avec un des navettes précédemment décrites. En d'autres termes, il est capable d'échanger avec une navette, dans un sens ou dans l'autre, un plateau ou un bac. De même, il est apte à coopérer, au sol, avec le deuxième système de convoyage c'est-à-dire avec une des tables de transfert précédemment décrites. En d'autres termes, il est capable d'échanger avec une table de transfert, dans un sens ou dans l'autre, un plateau ou un bac.

Un tel état de la technique, illustré dans le document US 2021/0395015, est une solution commerciale exploitée depuis de nombreuses années.

Une solution équivalente est décrite dans le document CN 209177372 U. Ce document divulgue en effet un système automatisé de stockage et de retrait d'articles, comprenant des racks configurés pour recevoir des unités de stockage, et une installation de convoyage pour acheminer les unités de stockages constitué d'un premier, deuxième et troisième système de convoyage comme décrits ci-dessus. Un bras robotisé d'un robot de préparation de commande, agencé au niveau du troisième système de convoyage permet de transférer des articles contenus dans les unités de stockage. En outre, le système automatisé de stockage et de retrait comporte un chariot autoguidé pour amener ou retirer les unités de stockage dudit système.

Selon les constatations de l'inventeur, une telle solution comporte toutefois les défauts suivants :
- l'existence d'un point de défaillance unique qui entraine l'arrêt complet du système en cas de panne, ce point de défaillance unique étant lié à la présence du troisième système de convoyage précité
- pas de possibilité de changer la séquence des unités de stockage acheminées arrivant jusqu'aux stations de préparation de commande à savoir que la séquence d'arrivée reproduit la séquence d'extraction des unités de stockage des racks de stockage,
- une faible évolutivité du système, en particulier si les capacités doivent être augmentées,
- une empreinte au sol importante.

### Résumé

La présente divulgation vient améliorer la situation.

Il est proposé, selon un **premier aspect**, un système de préparation de commande comprenant dans un entrepôt :
- une pluralité de racks chacun configuré pour recevoir des unités de stockage destinées pour des articles, les racks agencés suivant une pluralité de plans verticaux,
- au moins une zone de préparation de commande agencée à distance des racks,
- une installation de convoyage configurée pour acheminer une ou plusieurs unités de stockage reçue(s) dans les racks jusqu'à ladite au moins une zone de préparation de commande, suivant un premier sens d'acheminement, ou inversement pour acheminer une ou plusieurs unités de stockage depuis la zone de préparation de commande jusqu'aux racks dans un second sens d'acheminement, ladite installation de convoyage comprenant successivement, suivant le premier sens d'acheminement :
   - un premier système de convoyage qui est agencé dans une allée de rayonnage disposée entre deux racks adjacents, configuré pour acheminer des unités de stockage d'au moins un des deux racks comprenant plusieurs premiers dispositifs de convoyage agencés, suivant plusieurs hauteurs, lesdits premiers dispositifs étant indépendants les uns des autres pour l'acheminement horizontal d'unités de stockage le long de ladite allée de rayonnage,
   - un deuxième système de convoyage, comprenant au moins un deuxième dispositif de convoyage configuré pour l'acheminement vertical d'unités de stockage, depuis le premier dispositif de convoyage, jusqu'à un troisième système de convoyage suivant le premier sens d'acheminement,
   - le troisième système de convoyage configuré pour l'acheminement d'unités de stockage depuis le deuxième système de convoyage jusqu'à ladite au moins une zone de préparation de commande suivant le premier sens d'acheminement, et dans lequel le troisième système de convoyage comporte une pluralité de chariots autoguidés, circulant en champ libre sur une surface de roulement de l'entrepôt, lesdits chariots autoguidés comprenant des moyens de roulage configurés pour assurer un déplacement du chariot autoguidé suivant un plan horizontal de la surface de roulement.

Les caractéristiques exposées dans les paragraphes suivants peuvent, optionnellement, être mises en oeuvre, indépendamment les unes des autres ou en combinaison les unes avec les autres :

- la surface de roulement peut être une table de roulement surélevée, en tout ou partie, par rapport :
- à un sol de l'entrepôt sur lequel repose les racks, de sorte que des rails de guidage verticaux dudit au moins un deuxième dispositif de convoyage, s'étendent sous la hauteur de la table de roulement et/ou
- à une surface de soutien tel que le sol pour un opérateur de la station de préparation de commande de sorte qu'une portion de bord de la table, jouxtant la surface de soutien de l'opérateur, autorise un stationnement d'un des chariots autoguidés portant une unité de stockage de manière surélevée par rapport à la surface soutien.

En particulier, la surface de soutien est une plateforme comportant un mécanisme de réglage en hauteur configuré de manière à autoriser un réglage de différence de niveau entre la table de roulement et la plateforme.

Le système peut comprendre un système de transfert configuré pour assurer, d'une part, un transfert de l'unité de stockage, suivant le premier sens d'acheminement, depuis ledit au moins un deuxième dispositif de convoyage, alors en une position basse, et l'un des chariots autoguidés, stationné dans au moins un emplacement de transbordement, à proximité du deuxième dispositif de convoyage et configuré pour assurer, d'autre part, un transfert de l'unité de stockage, suivant le deuxième sens d'acheminement, depuis l'un des chariots autoguidés stationné dans ledit au moins un emplacement de transbordement et jusqu'au deuxième dispositif de convoyage.

Ledit au moins emplacement de transbordement peut comprendre un premier emplacement de transbordement et un deuxième emplacement de transbordement, agencés de part et d'autre du deuxième dispositif de convoyage en ladite position basse, et dans lequel ledit système de transfert est configuré pour opérer, sélectivement :
- un transfert de l'unité de stockage entre ledit deuxième dispositif de convoyage, en la position basse, et un premier chariot autoguidé parmi lesdits chariots autoguidés, stationné dans le premier emplacement de transbordement, en particulier suivant le premier sens d'acheminement ou respectivement le deuxième sens d'acheminement,
- un transfert de l'unité de stockage entre ledit deuxième dispositif de convoyage, en la position basse et un deuxième chariot autoguidé parmi lesdits chariots autoguidés, stationné dans le deuxième emplacement de transbordement, en particulier suivant le deuxième sens d'acheminement ou respectivement le premier sens d'acheminement.

Le système de transfert est embarqué audit au moins un deuxième dispositif de convoyage, et comprend une partie mobile latéralement configurée pour déployer l'unité de stockage depuis une première position pour laquelle ladite unité de stockage est portée par un support du deuxième dispositif de convoyage, jusqu'à une position en porte-à-faux latéral du support pour laquelle ladite unité de stockage est déplacée au-dessus de l'un des chariots autoguidés stationnés sur ledit au moins un emplacement de transbordement.

Selon un mode de réalisation :
- ladite au moins une station de commande comprend plusieurs stations de commande, indépendantes, accessibles par les chariots autoguidés par la surface de roulement,
- ledit au moins un deuxième dispositif de convoyage peut comporter plusieurs deuxièmes dispositifs de convoyage, indépendants, associés respectivement à plusieurs allées de rayonnage, desservant respectivement les différents racks et dans lequel la surface de roulement et les chariots autoguidés sont configurés pour desservir chacune des stations de préparation commande à partir d'unités de stockage provenant des différents deuxièmes dispositifs de convoyage.

Selon un mode de réalisation, les deuxièmes dispositifs de convoyage sont exclusivement positionnés, à demeure, en dehors des allées de rayonnage, et en dehors des racks de stockage.

Selon un mode de réalisation, ledit au moins un deuxième dispositif de convoyage comprend, pour chaque allée de rayonnage, un deuxième dispositif de convoyage associé aux premiers dispositifs de convoyage de ladite allée, ledit deuxième dispositif de convoyage configuré pour circuler suivant une direction verticale, en étant positionné, en dehors de ladite allée de rayonnage, de préférence décalé latéralement par rapport à ladite allée de rayonnage, suivant une direction transversale à ladite allée de rayonnage, et dans lequel chaque premier dispositif de convoyage est configuré pour circuler dans ladite allée jusqu'à une position en dehors de ladite allée, pour laquelle ledit premier dispositif de convoyage est positionné juxtaposé au deuxième dispositif de convoyage, dans une position de transbordement, et dans lequel le système de préparation de commande comprend un système de transfert, embarqué audit premier dispositif de convoyage ou audit second dispositif de convoyage configuré pour autoriser un transfert de ladite unité de stockage depuis le premier dispositif de convoyage alors dans ladite position de transbordement jusqu'au second dispositif de convoyage selon la premier sens d'acheminement.

En particulier, la surface de roulement, en particulier le sol ou la table de roulement, s'étend entre les stations de préparation de commande et les racks de stockage, à savoir que la surface de roulement s'étend exclusivement entre les stations de préparation de commande et les deuxièmes dispositifs de convoyage qui sont exclusivement en dehors des racks de stockage et des allées de rayonnage, et de sorte que les chariots autoguidés sont configurés pour circuler exclusivement en dehors des racks de stockage et des allées de rayonnage.

Selon un **deuxième aspect**, il est proposé un procédé de préparation d'au moins une commande comprenant un ou plusieurs articles mettant en oeuvre un système de préparation de commande selon la présente divulgation, le procédé comprenant :
- /A/ sélectionner une ou plusieurs unités de stockage, parmi les unités de stockage reçue(s) dans les racks, la ou lesdites unités de stockage contenant le ou les articles de ladite au moins une commande,
- /B/ acheminer la ou lesdites unités de stockage sélectionnées jusqu'à ladite au moins une zone de préparation de commande suivant le premier sens d'acheminement, par :
   - /B0/ Transfert de l'unité de stockage depuis un emplacement de stockage dans le rack jusqu'à un des premiers dispositifs de convoyage,
   - /B1/ convoyage selon un acheminement horizontal de ladite unité de jusqu'au deuxième système de convoyage, par déplacement du premier dispositif de convoyage,
   - /B2/ transfert de l'unité de stockage depuis le premier dispositif de convoyage jusqu'au deuxième dispositif de convoyage
   - /B3/ convoyage selon un acheminement vertical de ladite unité de stockage par le déplacement du deuxième dispositif de convoyage, jusqu'à une position basse,
   - /B4/ transfert de l'unité de stockage depuis le deuxième dispositif de convoyage jusqu'à l'un des chariots autoguidés,
   - /B5/ convoyage de ladite unité de stockage jusqu'à ladite au moins la zone de préparation de commande, par déplacement en champ libre du chariot autoguidé.

Selon un mode de réalisation du procédé selon le deuxième aspect, en /B4/ le transfert de l'unité de stockage jusqu'audit chariot autoguidé s'opère alors que ledit chariot est stationné dans ledit premier emplacement de transbordement, et alors qu' un autre des chariots autoguidés portant une autre unité de stockage est stationné dans le deuxième emplacement de transbordement, le procédé comprenant successivement à /B4/, le transfert de ladite autre unité de stockage depuis le deuxième emplacement de transbordement jusqu'au deuxième dispositif de convoyage maintenu en position basse, et ledit retour de ladite autre unité de stockage dans l'un des emplacements de réception du rack par convoyage selon un acheminement vertical du deuxième dispositif de convoyage, suivi du convoyage selon un acheminement horizontal de l'un des premiers dispositifs de convoyage, ledit système comportant un système de transfert, embarqué au premier dispositif de convoyage ou au deuxième dispositif de convoyage, configuré pour assurer un transfert de l'unité de stockage depuis le premier dispositif de convoyage jusqu'au deuxième dispositif de convoyage.

Selon un mode de réalisation du procédé selon le deuxième aspect, ledit procédé peut comprendre une pluralité de commandes en cours de préparation, le procédé comprenant
- ICI identifier informatiquement des articles communs parmi les commandes en cours de préparation, contenus dans une unité de stockage, commune auxdites commandes en cours de préparation, y compris une première commande, et une commande ultérieure à la première commande, et après le convoyage selon /B5/ du chariot autoguidé portant l'unité de stockage commune jusqu'à une zone de préparation de commande pour la préparation de la première commande,
- /D/ mettre en attente le chariot autoguidé transportant l'unité de stockage commune dans une zone d'attente ménagée dans ou à proximité de la zone de préparation, sans retourner l'unité de stockage au rack, de manière à libérer ladite zone de préparation pour réception d'au moins une autre unité de stockage convoyée selon /B5/ par un autre des chariots autoguidés, ladite au moins une autre unité de stockage étant nécessaire à la préparation de la première commande voire d'une deuxième commande,
- /E/ retourner le chariot autoguidé portant ladite unité de stockage commune depuis la zone d'attente jusqu'à la zone de préparation de commande, pour la préparation de la commande ultérieure.

Selon un mode de réalisation du système de préparation de commande selon le premier aspect, les chariots autoguidés sont équipés chacun d'un module de communication, configuré recevoir et transmettre des données avec une unité de contrôle distante, informatique, de manière sans fil, et dans lequel ladite unité de contrôle, distante, assure la gestion et le contrôle des systèmes de convoyage, y compris la gestion des trajectoires de guidage des chariots autoguidés sur la surface de roulement, pour assurer l'acheminement d'une unité de stockage depuis un emplacement de stockage dans le rack de stockage jusqu' à ladite au moins une station de préparation de commande PC, ladite unité de contrôle comporte un ou plusieurs processeurs, une mémoire et un jeu d'instructions configurées pour la mise en oeuvre du procédé de préparation de commande selon le deuxième aspect.

### Brève description des dessins

D'autres caractéristiques, détails et avantages apparaîtront à la lecture de la description détaillée ci-après, et à l'analyse des dessins annexés, sur lesquels :
**Fig. 1**
   [Fig. 1] montre un état de la technique mentionné en introduction.
**Fig. 2**

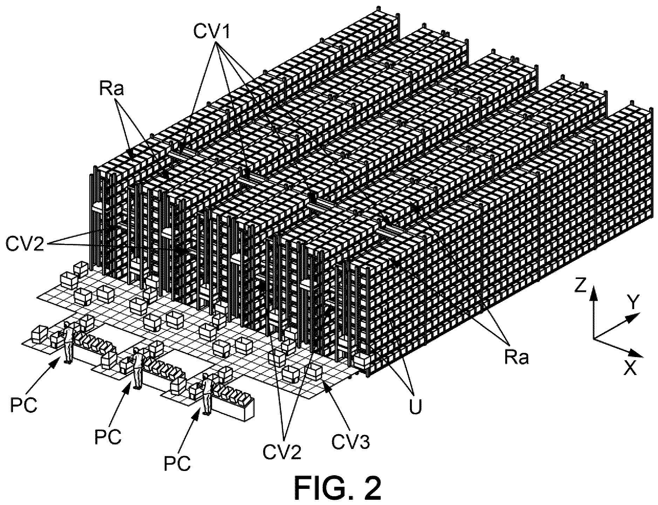

   [Fig. 2] est une vue schématique en perspective d'un système selon la présente divulgation comportant de manière notable, un troisième système de convoyage comportant une pluralité de chariots autoguidés configurés pour circuler, suivant un premier sens d'acheminement, depuis des deuxièmes dispositifs de convoyage, jusqu'à des stations de préparations de commande, ou inversement depuis chacune des stations de commande jusqu'aux deuxièmes dispositifs de convoyage, suivant un second sens de cheminement.
**Fig. 3**

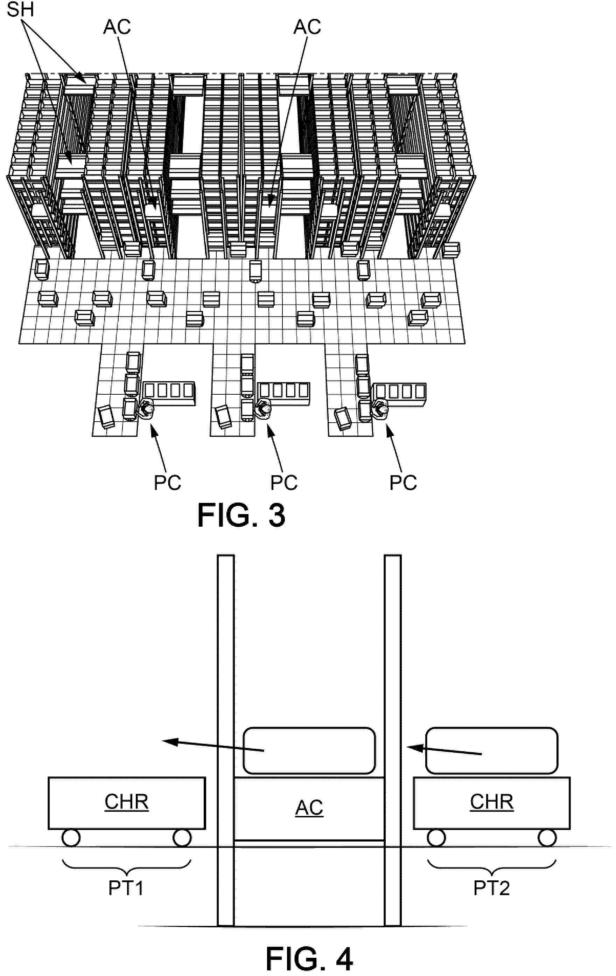

   [Fig. 3] est une double vue, illustrant :
   - à gauche un vue de dessus du système, illustrant du haut vers le bas des premiers dispositifs de convoyage, dans les allées de rayonnage, les dispositifs répartis suivant trois niveaux de hauteur, les deuxièmes dispositifs de convoyage à déplacement vertical, en bout d'allée, la surface de roulement sur laquelle circulent les chariots autoguidés, les stations de préparation de commande jouxtant un bord de la surface de roulement formée par une table surélevée par rapport au sol, en bordure de laquelle des opérateurs préparent les commandes aux stations de préparations de commande
   - à droite, une vue de détail d'une station de préparation de commande, illustrant la surface de roulement qui est la table de roulement, surélevée par rapport à la surface de soutien sur laquelle opère l'opérateur, la surélévation de la table de roulement offrant une ergonomie améliorée pour l'opérateur lors de la collecte des articles dans une unité de stockage porté par le chariot autoguidé stationné en bordure de la table de roulement.
**Fig. 4**
   [Fig. 4] est une vue schématique de détail d'un deuxième dispositif de convoyage en position, basse, à hauteur de la surface de roulement, voire à proximité de la surface de roulement, acheminant une unité de stockage sur un support, un premier chariot autoguidé stationné sur la surface de roulement en un premier emplacement de transbordement, autorisant un premier transfert de l'unité de stockage depuis le deuxième dispositif de convoyage jusqu'au premier chariot autoguidé, suivant le premier sens d'acheminement de l'unité de stockage depuis le rack jusqu'à la station de commande, un deuxième chariot portant une autre unité de stockage stationné sur la surface de roulement en un deuxième emplacement de transbordement, autorisant un deuxième transfert de ladite autre unité de stockage depuis le chariot autoguidé jusqu'au deuxième dispositif de convoyage, suivant le deuxième sens d'acheminement de l'unité de stockage depuis la station de préparation de commande jusqu'au rack de stockage.
**Fig. 5**

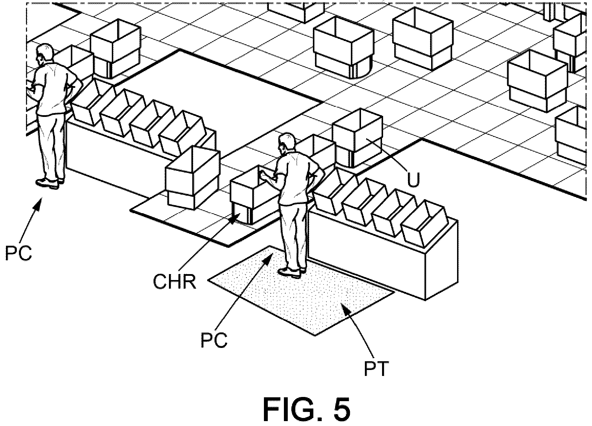

   [Fig. 5] est une vue d'une alternative de la figure 4 pour laquelle l'opérateur présent sur la station de préparation de commande repose sur une plateforme comportant un mécanisme de réglable en hauteur.

### Description des modes de réalisation

La présente divulgation est relative à un système de préparation de commande comprenant dans un entrepôt :
- une pluralité de racks Ra chacun configuré pour recevoir des unités de stockage U destinées pour des articles, les racks de stockage agencés les uns par rapport aux autres suivant une pluralité de plans verticaux,
- au moins une zone de préparation de commande PC agencée à distance des racks.

De manière générale, les unités de stockage U peuvent être des conteneurs d'articles tels que des bacs ou des plateaux.

En référence à la figure 2, et de manière générale, les racks de stockage Ra peuvent s'étendre parallèlement les uns aux autres, suivant des plans verticaux, parallèles au plan YZ.

Les racks de stockage Ra sont espacés les uns des autres, par des allées de rayonnage respectives, en particulier suivant la direction X à la figure 2, à savoir suivant une direction transversale aux allées de rayonnage. Les allées s'étendant donc en longueur suivant la direction Y, et en largeur suivant la direction X à la figure 2. De manière générale, les racks de stockage Ra comportent des emplacements de stockage pour les unités de stockage U. Les emplacements de stockage dans le rack de stockage Ra sont répartis superposés les uns des autres, suivant la direction verticale en formant une colonne d'emplacements de stockage superposés, à savoir suivant la direction Z à la figure 2, mais encore suivant la longueur du rack de stockage, à savoir que le rack de stockage comporte une pluralité de colonnes d'emplacements de stockage, répartis les uns par rapport aux autres, suivant la direction Y.

De manière générale, les emplacements de stockage des racks sont ouverts, latéralement aux racks de stockage, respectivement vers lesdites allées de rayonnage, à savoir que le transfert des unités de stockage dans les emplacements de stockage lors du chargement, ou depuis lesdits emplacements lors du déchargement, s'opère depuis les allées de rayonnage, respectives, suivant une direction de chargement/déchargement perpendiculaire aux plans verticaux des racks de stockage, à savoir suivant la direction X, sur la figure 2.

De manière générale, les racks de stockage peuvent comprendre une structure verticale formée par des montants ou des poteaux, typiquement sous forme de profilés métalliques. Les poteaux peuvent être classiquement répartis :
- suivant la longueur du rack de stockage Ra, en particulier suivant la direction Y sur la figure 2, et selon un espacement correspondant au moins à la largeur des colonnes d'emplacements de stockage superposés
- suivant la largeur du rack de stockage, en particulier suivant la direction X sur la figure 2, et selon un espacement qui peut typiquement correspond à la profondeur des emplacements de stockage, à savoir suivant la direction X, à la figure 2.

La structure du rack de stockage Ra peut encore comprendre typiquement un système d'entretoisement assurant le maintien des montants/poteaux entre eux. Les emplacements de stockage peuvent être matérialisés par des couples d'interfaces mécaniques, en regard, typiquement des équerres sur lesquels reposent les unités de stockage U dans le rack de stockage. Les racks de stockage Ra reposent typiquement sur un sol de l'entrepôt, typiquement par appui de leurs poteaux, et peuvent être typiquement ancrés au sol.

Le système de préparation de commande comporte une installation de convoyage configurée pour acheminer une ou plusieurs unités de stockage reçues dans les racks de stockage jusqu'à ladite au moins une zone de préparation de commande PC, suivant un premier sens d'acheminement, ou inversement pour acheminer une ou plusieurs unités de stockage depuis la zone de préparation de commande jusqu'aux racks de stockage suivant un second sens d'acheminement.

Selon la présente divulgation, ladite installation de convoyage peut comprendre successivement, suivant le premier sens d'acheminement :
- un premier système de convoyage CV1 qui est agencé dans une des allées de rayonnage, ladite allée étant disposée entre deux racks adjacents, le premier dispositif de convoyage configuré pour acheminer des unités de stockage U d'au moins un des deux racks de stockage de part et d'autre de ladite allée de rayonnage, comprenant plusieurs premiers dispositifs de convoyage SH agencés, suivant plusieurs hauteurs, lesdits premiers dispositifs de convoyage SH étant indépendants les uns des autres pour l'acheminement horizontal d'unités de stockage le long de ladite allée de rayonnage,
- un deuxième système de convoyage CV2, comprenant au moins un deuxième dispositif de convoyage AC configuré pour l'acheminement vertical d'unités de stockages, depuis le premier système de convoyage, jusqu'à un troisième système de convoyage suivant le premier sens d'acheminement,
- un troisième système de convoyage CV3 configuré pour l'acheminement d'unités de stockage depuis le deuxième système de convoyage jusqu'à ladite au moins une zone de préparation de commande PC suivant le premier sens d'acheminement, et dans lequel le troisième système de convoyage comporte une pluralité de chariots autoguidés CHR, circulant en champ libre sur une surface de roulement de l'entrepôt, lesdits chariots autoguidés comprenant des moyens de roulage configurés pour assurer un déplacement du chariot autoguidé suivant un plan horizontal de la surface de roulement

Les premiers dispositifs de convoyage SH sont agencés dans les allées de rayonnage. Les premiers dispositifs de convoyage SH d'une même allée de rayonnage sont répartis suivant les différents niveaux des emplacements de stockage superposés. Un même dispositif de convoyage SH est configuré pour charger ou décharger les emplacements de stockage accessibles depuis ladite allée de rayonnage, au niveau de hauteur à laquelle travaille le premier dispositif de convoyage SH, à savoir les emplacements de stockage d'un rack de stockage disposés d'un premier côté de ladite allée de rayonnage, et de préférence, également les emplacements de stockage disposés d'un deuxième côté de ladite allée de rayonnage.

Les premiers dispositifs de convoyage SH peuvent typiquement comprendre respectivement des chariots motorisés, circulant selon des directions horizontales, parallèles entre elles, et en particulier parallèles à la direction Y selon la figure 2. Chaque chariot motorisé circule typiquement, sur des systèmes de guidage, tels que par exemple des rails, solidaires respectivement de deux racks de stockage, de part et d'autre de l'allée de rayonnage. Chaque chariot motorisé est équipé de moyens de circulation, tels que des moyens de roulement, comme par exemple des roues aptes à coopérer avec les systèmes de guidage précités.

Les premiers dispositifs de convoyage SH sont des équipements qui circulent chacun suivant une unique direction horizontale le long de ladite allée. Les moteurs des chariots sont typiquement alimentés par liaison filaire.

Les premiers dispositifs de convoyage peuvent comprendre chacun un (premier) système de transfert configuré pour assurer le transfert d'une unité de stockage depuis un emplacement de stockage d'au moins un côté de l'allée, voire de préférence des deux côtés de ladite allée de rayonnage, jusqu'à son chargement sur le premier dispositif de convoyage, ou inversement le transfert d'une unité de stockage depuis le premier dispositif de convoyage SH jusqu'à un emplacement de stockage dans le rack de stockage, sur au moins un côté de ladite allée de rayonnage, voire de préférence des deux côtés de ladite allée de rayonnage. En d'autres termes, ces premiers dispositifs de convoyage sont susceptibles d'échanger une unité de stockage avec le rack et ce, dans une direction perpendiculaire à l'allée dans laquelle ils circulent. De manière générale, le système de transfert des premiers dispositifs de convoyage peut comprendre une partie mobile latéralement configurée pour déployer l'unité de stockage U depuis une première position pour laquelle ladite unité de stockage U est portée par un support du premier dispositif de convoyage SH, jusqu'à une position en porte-à-faux latérale du support pour laquelle ladite unité de stockage est déplacée dans un emplacement de stockage du rack, suivant la direction X à la figure 2.

Le deuxième système de convoyage CV2, comprend au moins un deuxième dispositif de convoyage AC configuré pour l'acheminement vertical d'unités de stockage U, depuis le premier dispositif de convoyage, jusqu'à un troisième système de convoyage suivant le premier sens d'acheminement.

Ledit au moins un deuxième dispositif de convoyage AC peut comprendre, pour chaque allée de rayonnage, un deuxième dispositif de convoyage AC associé aux premiers dispositifs de convoyage SH de ladite allée de rayonnage.

Ledit deuxième dispositif de convoyage AC est configuré pour circuler suivant une direction verticale, et comprend typiquement un chariot circulant verticalement, guidé par des rails verticaux, typiquement le long de poteaux du deuxième système de convoyage CV2. Chaque chariot de l'un des dispositifs de convoyage est configuré pour circuler suivant une unique direction verticale, le long des rails verticaux.

Le deuxième dispositif de convoyage AC positionné, en dehors de ladite allée de rayonnage, de préférence décalé latéralement par rapport à ladite allée de rayonnage, suivant une direction transversale à ladite allée de rayonnage, à savoir selon la direction X à la figure 2.

De préférence, les deuxièmes dispositifs de convoyage AC sont exclusivement positionnés en dehors des allées de rayonnage et en dehors des racks de stockage, et de préférence respectivement en prolongement des extrémités longitudinales des racks de stockage, comme visible à la figure 2, par exemple sur un côté du système de rack. Un tel positionnement des deuxièmes dispositifs de convoyage AC, exclusivement en dehors des racks de stockage, facilite le câblage électrique filaire des chariots notamment pour l'alimentation électrique du moteur contrôlant le déplacement vertical.

Chacun des premiers dispositifs de convoyage SH est configuré pour circuler dans ladite allée de rayonnage jusqu'à une position typiquement en dehors de ladite allée de rayonnage, pour laquelle ledit premier dispositif de convoyage SH est positionné juxtaposé au deuxième dispositif de convoyage AC, dans une position autorisant un transbordement entre ces deux dispositifs. Dans cette position de transbordement, le premier dispositif de convoyage SH et le deuxième dispositif de convoyage alors à même hauteur sont juxtaposés, décalés suivant une direction transversale à ladite allée de rayonnage, à savoir suivant la direction X à la figure 2.

Le système de préparation de commande comprend un système de transfert, qui est typiquement embarqué audit premier dispositif de convoyage SH ou encore audit second dispositif de convoyage AC configuré pour autoriser un transfert de ladite unité de stockage U depuis le premier dispositif de convoyage SH alors dans ladite position de transbordement jusqu'au second dispositif de convoyage AC selon le premier sens d'acheminement.

Lorsqu'embarqué au premier dispositif de convoyage SH, le système de transfert assurant le transfert entre le premier dispositif de convoyage SH et le deuxième dispositif de convoyage AC peut être le même premier système de transfert qui est utilisé pour assurer un transfert de l'unité de stockage entre le (premier) dispositif de convoyage SH et un des emplacements de stockage du rack de stockage Ra.

Lorsqu'embarqué au deuxième dispositif de convoyage AC, le système de transfert assurant le transfert entre le premier dispositif de convoyage SH et le deuxième dispositif de convoyage AC peut être le même (deuxième) système de transfert qui est utilisé pour transférer l'unité de stockage entre le deuxième dispositif de convoyage AC et au troisième système de convoyage qui est décrit ci-après.

Le troisième système de convoyage CV3 est configuré pour l'acheminement d'unités de stockage depuis le deuxième système de convoyage jusqu'à ladite au moins une zone de préparation de commande PC, suivant le premier sens d'acheminement.

De manière notable, et selon la présente divulgation, le troisième système de convoyage comporte une pluralité de chariots autoguidés CHR, circulant en champ libre sur une surface de roulement de l'entrepôt, lesdits chariots autoguidés comprenant des moyens de roulage configurés pour assurer un déplacement du chariot autoguidé suivant un plan horizontal de la surface de roulement.

On entend par « en champ libre », le fait que les chariots autoguidés CHR, en particulier les moyens de roulage sont configurés pour circuler sur la surface de roulement à savoir une surface plane, sans nécessiter de rails de guidage sur la surface de roulement.

La surface de roulement peut être typiquement le sol de l'entrepôt, ou encore la surface supérieure d'une table de roulement surélevée par rapport au sol, sensiblement plane.

La surface de roulement, à savoir le sol ou la table de roulement, s'étend de préférence entre les stations de préparation de commande PC et les racks de stockage Ra, et de préférence exclusivement entre les stations de préparations de commande PC et les deuxièmes dispositifs de convoyage AC qui sont exclusivement en dehors des racks de stockage et des allées de rayonnage. En particulier, les chariots autoguidés CHR circulent exclusivement en dehors des racks de stockage et des allées de rayonnage.

On facilite les interventions de maintenance en cas de panne d'un des chariots autoguidés. En particulier la maintenance ne requiert pas d'intervenir au-dessus, en dessous ou au travers du rack de stockage. La zone de circulation des chariots autoguidés n'est pas limitée en hauteur par comparaison à une alternative où la surface de roulement passerait en dessous des racks de stockage. La hauteur cumulée du chariot autoguidé CHR et de l'unité de stockage U portée par le chariot autoguidé n'est pas contrainte en hauteur. Les trajectoires des chariots autoguidés entre les stations de préparation de commande et des deuxièmes dispositifs de convoyage, d'un même côté du système de rack est de course limitée.

Les moyens de roulage comportent un ou plusieurs roues motorisées. Les chariots autoguidés sont équipés d'un mécanisme de changement de direction. Le changement de direction peut être opéré en tournant le chariot, par exemple, par le contrôle de deux roues motorisées, par en asservissant les deux roues suivant des vitesses de rotation différentes, ou encore en inversant le sens de rotation des roues, à savoir que le chariot y compris son châssis change d'orientation pour obtenir un changement de direction. Inverser le sens de rotation des deux roues motorisées peut notamment permettre au chariot autoguidé de pivoter autour d'un axe vertical fixe du chariot autoguidé.

Selon un autre mode de réalisation enseigné par FR3125514 (A1) de la présente Demanderesse, le changement de direction des véhicules peut être opéré par un dispositif de pivotement et d'entrainement des roues par rapport à un châssis du chariot qui autorise le changement de direction, sans que le châssis ne change d'orientation. Les chariots autoguidés CHR peuvent ainsi se déplacer suivant les deux directions du plan horizontal, et par exemple suivant la direction X et la direction Y, en conservant une même orientation de son châssis sur la surface de roulement.

Les chariots autoguidés sont équipés chacun d'un module de communication, configuré recevoir et transmettre des données, telles que des instructions de guidage, avec une unité de contrôle, distante, informatique, de manière sans fil.

Ladite unité de contrôle, distante, assure la gestion et le contrôle des systèmes de convoyage, y compris la gestion des trajectoires de guidage des chariots autoguidés sur la surface de roulement, pour assurer l'acheminement des unités de stockage depuis les emplacements dans le rack de stockage jusqu' à ladite au moins une station de préparation de commande PC, en évitant notamment les collisions des chariots sur la surface de roulement, et en les coordonnant avec les autres systèmes de convoyage de ladite installation..

La présente divulgation est née des constatations par l'inventeur que le premier système de convoyage CV1 et le deuxième système de convoyage CV2 sont des dispositifs de convoyage, qui en cas de défaillance ne cause pas l'arrêt total du système de préparation de commande, mais seulement des arrêts localisés à certaines parties des racks de stockage associés aux dispositifs de convoyage défaillant, et contrairement aux convoyeurs à rouleaux formant le troisième système de convoyage illustré à la figure 1 qui, dans un tel état de la technique, constitue un point de défaillance unique, provoque l'arrêt total du système de préparation de commande.

Plus encore, la présente divulgation est née de la volonté de la Demanderesse de proposer un système de préparation de commande qui bénéficie d'une fiabilité éprouvée s'agissant du premier système de convoyage et du deuxième système de convoyage, sans que le système de préparation soit affecté par les défauts du troisième système de convoyage.

Les chariots autoguidés du troisième système de convoyage apportent un progrès notable par rapport à cet état de la technique, en particulier aux convoyeurs à rouleaux, en particulier, par :
- La suppression des points de défaillance unique : en cas de défaillance d'un des chariots autoguidés de la flotte, l'unité de contrôle est configurée pour identifier à distance le chariot défaillant sur la surface de roulement, et assurer une commande et un contrôle des autres chariots autoguidés, pour la poursuite des opérations de préparation de commande, en évitant les collisions avec le chariot autoguidé défaillant,
- La mise en oeuvre éventuelle de stratégie de commande autorisant un acheminement des unités de stockage, et selon un ordre modifié par rapport à l'ordre de séquence des unités de stockage acheminées par les deuxièmes dispositifs de convoyage AC, et en particulier des stratégies de temporisation, grâce aux chariots autoguidés, qui sont indépendants les uns des autres,
- Une désolidarisation physique totale entre, d'une part, les deuxièmes dispositifs de convoyage AC, à déplacement vertical, assurant le levage/descente des unités de stockage, et d'autre part, les stations de préparation de commande, qui sont typiquement de nombre supérieur ou égale à 2,
- Une facilité à augmenter la capacité du système de préparation de commande, à savoir le nombre moyen de commandes par unité de temps, simplement par l'ajout de chariots autoguidés supplémentaires sur la surface de roulement, et de préférence sans autre modification physique de la surface de roulement du système de préparation de commande, voire par l'ajout éventuellement de stations de préparation de commande supplémentaire,
- L'utilisation de chariots autoguidés circulant uniquement sur la surface de roulement, à savoir simple et peu puissant par comparaison aux chariots autoguidés comportant des moyens de grimpe tels que connus par exemple du document FR 3 125 516 qui autorisent certes, non seulement un déplacement à l'horizontale, mais encore un déplacement du chariot autoguidé à la verticale, beaucoup plus énergivore pour le levage des unités de stockage dans les racks de stockage : au contraire et selon la présente divulgation, la fonction de levage des unités de stockage dans les racks de stockage est laissée aux deuxièmes dispositifs de convoyage AC fonctionnant typiquement suivant une alimentation électrique filaire. La structure des chariots autoguidés en est simplifiée ; en particulier les batteries des chariots autoguidés peuvent être de capacité réduite par rapport à celle d'un chariot muni de tels moyens de grimpe.

De manière générale, au moins selon un mode de réalisation, ladite au moins une station de commande comprend plusieurs stations de commande PC, indépendantes, accessibles par les chariots autoguidés par la surface de roulement, et ledit au moins un deuxième dispositif de convoyage comporte plusieurs deuxièmes dispositifs de convoyage AC, indépendants, associés respectivement à plusieurs allées de rayonnage, desservant respectivement les différents racks de stockage par les allées de rayonnage respectives.

La surface de roulement et les chariots autoguidés sont configurés pour desservir chacun des stations de préparation commande PC à partir d'unités de stockage provenant des différents deuxièmes dispositifs de convoyage AC.

Selon un mode de réalisation, le système de préparation de commande comprend un (deuxième) système de transfert configuré pour assurer, d'une part, un transfert de l'unité de stockage U, suivant le premier sens d'acheminement, depuis ledit au moins un deuxième dispositif de convoyage AC, alors en une position basse, et l'un des chariots autoguidés CHR, stationné dans au moins un emplacement de transbordement PT1, PT2, à proximité du deuxième dispositif de convoyage AC et configuré pour assurer, d'autre part, un transfert de l'unité de stockage, suivant le deuxième sens d'acheminement, depuis l'un des chariots autoguidés stationné dans ledit au moins un emplacement de transbordement PT1, PT2 et jusqu'au deuxième dispositif de convoyage AC.

Selon au moins un mode de réalisation illustré à ladite figure 4, ledit au moins emplacement de transbordement comprend un premier emplacement de transbordement PT1 et un deuxième emplacement de transbordement PT2, les deux emplacements agencés de part et d'autre du deuxième dispositif de convoyage AC en ladite position basse.

Avantageusement, selon le mode de réalisation illustré à la figure 4, ledit système de transfert peut être configuré pour opérer, sélectivement :
- un transfert de l'unité de stockage entre ledit deuxième dispositif de convoyage AC, en la position basse, et un premier chariot autoguidé parmi lesdits chariots autoguidés, stationné dans le premier emplacement de transbordement PT1, en particulier suivant le premier sens d'acheminement (ou respectivement le deuxième sens d'acheminement),
- un transfert de l'unité de stockage entre ledit deuxième dispositif de convoyage AC, en la position basse et un deuxième chariot autoguidé parmi lesdits chariots autoguidés, stationné dans le deuxième emplacement de transbordement PT2, en particulier suivant le deuxième sens d'acheminement (ou respectivement le premier sens d'acheminement).

Disposer de deux emplacements de transbordement pour les deux chariots autoguidés, permet avantageusement de limiter le temps d'immobilisation du deuxième dispositif de convoyage AC en ladite position basse, en procédant à un déchargement de l'unité de stockage depuis le dispositif de convoyage AC jusqu' au premier chariot sur le premier emplacement de transbordement PT1 et successivement au chargement du deuxième dispositif de convoyage AC à partir du deuxième chariot motorisé stationné dans ledit deuxième emplacement.

Les deux transferts depuis les deux emplacements sont effectués sans perte de temps dû à un déplacement du deuxième chariot motorisé, et par comparaison à deux transferts qui s'opéraient d'un uniquement emplacement de transbordement nécessitant le déplacement du premier chariot après son chargement, et en vue de permettre le déchargement du deuxième chariot.

Selon un mode de réalisation, le système de transfert peut être embarqué audit au moins un deuxième dispositif de convoyage AC, et comprend une partie mobile latéralement configurée pour déployer l'unité de stockage U depuis une première position pour laquelle ladite unité de stockage U est portée par un support du deuxième dispositif de convoyage AC, jusqu'à une position en porte-à-faux latérale du support pour laquelle ladite unité de stockage est déplacée au-dessus de l'un des chariots autoguidés stationnés sur ledit au moins un emplacement de transbordement PT1, PT2.

Selon un mode de réalisation, la surface de roulement peut être simplement le sol de l'entrepôt, en particulier le sol tel qu'une dalle béton sur lequel reposent les racks de stockage Ra du système de préparation de commande.

Selon un autre mode de réalisation, la surface de roulement est une table de roulement surélevée, en tout ou partie, par rapport :
- à un sol l'entrepôt sur lequel repose les racks de stockage, et en particulier de sorte que des rails de guidage verticaux dudit au moins un deuxième dispositif AC, s'étendent sous le niveau de la table de roulement et/ou
- à une surface de soutien tel que le sol pour un opérateur de la station de préparation de commande de sorte qu'une portion de bord de la table, jouxtant la surface de soutien de l'opérateur, autorise un stationnement d'un des chariots autoguidés CHR portant une unité de stockage U de manière surélevée par rapport à la surface soutien.

Un tel mode de réalisation est en particulier illustré sur le mode de réalisation des figures 2 à 5 qui illustre un mode de réalisation pour laquelle la table de roulement est surélevée en totalité, par rapport au sol de l'entrepôt, en particulier depuis les stations de préparations de commande jusqu'audit au moins un emplacement de transbordement au niveau du deuxième dispositif de convoyage AC, à savoir de préférence sur une zone en dehors des racks de stockage et allées de rayonnage entre les racks.

La surface de roulement de la table de roulement, peut-être à une hauteur par rapport au sol comprise entre 600mm et 800mm.

La table de roulement peut présenter un (premier) intérêt pour améliorer l'ergonomie de travail au niveau de ladite au moins une station de préparation de commande, et en particulier des stations de préparation de commande, agencée(s) en bordure de la table de roulement. À cet effet la table de roulement est surélevée par rapport à une surface de soutien pour un opérateur de la station de préparation de commande PC, de sorte qu'une portion de bord de la table de roulement, jouxtant la surface de soutien, autorise un stationnement d'un des chariots autoguidés CHR portant une unité de stockage de manière surélevée par rapport à la surface soutien.

La surface de soutien peut être le sol de l'entrepôt ou éventuellement une plateforme PT comportant en particulier un mécanisme de réglage en hauteur configurée de manière à autoriser un réglage de différence de niveau entre la table de roulement et la plateforme PT. Un tel mécanisme de réglage peut par exemple comprend des systèmes vis/écrou, manuel, ou électrique, tels que des vérins électriques, pour changer le niveau de la plateforme par rapport au sol.

Ainsi, avantageusement, lors de la collecte des articles dans l'unité de stockage porté par le chariot autoguidé en bordure de table, la surélévation du chariot par rapport à la surface de soutien de l'opérateur permet avantageusement à l'opérateur de collecter les articles sans avoir à se pencher dans une position inconfortable.

Les différentes stations de préparation de commande peuvent présenter de préférence des mécanismes de réglage individuels, permettant d'adapter l'ergonomie de chaque station en fonction des différents opérateurs des stations de préparation de commande.

De manière générale, la table de roulement peut présenter une surface de roulement formée par un revêtement assurant un coefficient statique µ avec les moyens de roulage des chariots autoguidés supérieur ou égal à 0,3, voire supérieur ou égal à 0,4, voire supérieur ou égal 0,5, voire supérieur ou égal 0,6. On limite avantageusement les risques de glissement des roues avec la surface de roulement.

De manière générale, les chariots autoguidés peuvent être localisés par utilisation d'un ou plusieurs encodeur(s) ciblant la rotation des roues motorisées, et typiquement encore par l'utilisation de repères au sol, détecter optiquement, voire encore par utilisation de lidar. En cas de glissement des roues, peut provoquer une incohérence entre la mesure de l'encodeur et la position réelle du chariot, jusqu'à dans certains cas, provoquer une mise en défaut du système de location et son arrêt. Disposer d'une surface de roulement à coefficient de frottement maitrisé permet de limite les risques de glissement, et ainsi l'apparition de ces arrêts intempestifs, et, quelle que soit la qualité du sol de l'entrepôt dans lequel le système de préparation de commande est installé.

La table de roulement peut présenter pour (notamment deuxième) intérêt de faciliter la mise à niveau entre ledit chariot autoguidé dans ledit au moins un emplacement de transbordement PT1, PT2 et ledit deuxième dispositif de convoyage AC, en position basse, par la surélévation des chariots autoguidés par rapport au sol. Un tel mis à niveau facilite les transferts de l'unité de stockage entre le deuxième dispositif de convoyage AC et ledit chariot autoguidé de préférence, dans le premier sens d'acheminement ou dans le second sens d'acheminement, par (simples) déplacements horizontaux.

La présente divulgation est encore relative à un procédé de préparation d'au moins une commande comprenant un ou plusieurs articles mettant en oeuvre un système de préparation de commande selon la présente divulgation

Le procédé de préparation de commande peut ainsi comprendre :
- /A/ sélectionner une ou plusieurs unités de stockage U, parmi les unités de stockage reçue(s) dans les racks, la ou lesdites unités de stockage contenant le ou les articles de ladite au moins une commande,
- /B/ acheminer la ou lesdites unités de stockage sélectionnées jusqu'à ladite au moins une zone de préparation de commande suivant le premier sens d'acheminement, par :
   - /B0/ transfert de l'unité de stockage depuis un emplacement de stockage dans le rack jusqu'à un des premiers dispositifs de convoyage SH
   - /B1/ convoyage selon un acheminement horizontal de ladite unité de jusqu'au deuxième système de convoyage, par déplacement du premier dispositif de convoyage SH,
   - /B2/ transfert de l'unité de stockage depuis le premier dispositif de convoyage SH jusqu'au deuxième dispositif de convoyage AC
   - /B3/ convoyage selon un acheminement vertical de ladite unité de stockage par le déplacement du deuxième dispositif de convoyage AC, jusqu'à une position basse,
   - /B4/ transfert de l'unité de stockage depuis le deuxième dispositif de convoyage jusqu'à l'un des chariots autoguidés,
   - /B5/ convoyage de ladite unité de stockage jusqu'à ladite au moins la zone de préparation PC de commande, par déplacement en champ libre du chariot autoguidé CHR.

À l'inverse, l'installation de convoyage peut assurer, dans le deuxième sens d'acheminement, le réassort des racks de stockage avec des unités de stockage comportant des articles.

La présente divulgation peut encore présenter un procédé de réassort comprenant :
- /a/ remplir un ou plusieurs unités de stockage avec des articles,
- /b/ acheminer la ou lesdites unités de stockage remplies des articles jusqu'à un ou plusieurs emplacements de stockage dans les racks de stockage suivant le deuxième sens d'acheminement, par :
   - /b0/ convoyage de ladite unité de stockage jusqu'au deuxième système de convoyage, par déplacement en champ libre du chariot autoguidé CHR,
   - /b1/ transfert de l'unité de stockage depuis le chariot autoguidé jusqu'au deuxième dispositif de convoyage AC, en position basse,
   - /b2/ convoyage selon un acheminement vertical de ladite unité de stockage par le déplacement du deuxième dispositif de convoyage AC, depuis ladite position basse jusqu'à niveau d'un emplacement de stockage, vide, dans le rack de stockage,
   - /b3/ transfert de l'unité de convoyage depuis ledit deuxième dispositif de stockage jusqu'à l'un des premiers dispositifs de convoyage, juxtaposé,
   - /b4/ convoyage selon un acheminement horizontal de ladite unité de jusqu'au dit emplacement de stockage, vide, par déplacement du premier dispositif de convoyage SH,
   - /b5/ transfert de ladite unité de convoyage depuis le premier dispositif de convoyage jusqu'audit emplacement de stockage vide, dans ledit rack de stockage.

Selon un mode de réalisation en /B4/ le transfert de l'unité de stockage jusqu'audit chariot autoguidé s'opère alors que ledit chariot est stationné dans ledit premier emplacement de transbordement PT1, et alors qu'un autre des chariots autoguidés portant une autre unité de stockage est stationné dans le deuxième emplacement de transbordement PT2.

Le procédé peut alors comprendre, successivement à /B4/, le transfert de ladite autre unité de stockage depuis le deuxième emplacement de transbordement PT2 jusqu'au deuxième dispositif de convoyage maintenu en position basse, et ledit retour de ladite autre unité de stockage dans l'un des emplacements de stockage du rack par convoyage selon un acheminement vertical du deuxième dispositif de convoyage AC, suivi du convoyage selon un acheminement horizontal de l'un des premiers dispositifs de convoyage SH.

A cet effet ledit système comportant le (premier) système de transfert, embarqué au premier dispositif de convoyage SH ou le (deuxième) système de transfert embarqué au deuxième dispositif de convoyage, configuré pour assurer un transfert de l'unité de stockage U depuis le premier dispositif de convoyage SH jusqu'au deuxième dispositif de convoyage AC.

Selon un mode de réalisation, et selon une stratégie de commande avantageuse, l'utilisation de chariots autoguidés permet la mise en oeuvre de stratégie de temporisation.

Selon un mode de réalisation ledit procédé de préparation de commande peut comprendre une pluralité de commandes en cours de préparation, le procédé comprenant
- ICI identifier informatiquement des articles communs parmi les commandes en cours de préparation, contenus dans une unité de stockage, commune auxdites commandes en cours de préparation, y compris une première commande, et une commande ultérieure à la première commande, et après le convoyage selon /B5/ du chariot autoguidé portant l'unité de stockage commune jusqu'à une zone de préparation de commande pour la préparation de la première commande
- /D/ mettre en attente le chariot autoguidé transportant l'unité de stockage commune dans une zone d'attente ménagée dans ou à proximité de la zone de préparation, sans retourner l'unité de stockage au rack de stockage, de manière à libérer ladite zone de préparation pour réception d'au moins une autre unité de stockage convoyée selon /B5/ par un autre des chariots autoguidés, ladite au moins une autre unité de stockage étant nécessaire à la préparation de la première commande voire d'une deuxième commande,
- /E/ retourner le chariot autoguidé portant ladite unité de stockage commune depuis la zone d'attente jusqu'à la zone de préparation de commande, pour la préparation de la commande ultérieure.

De manière générale, les chariots autoguidés sont équipés chacun du module de communication, configuré recevoir et transmettre des données avec ladite unité de contrôle, distante, informatique, de manière sans fil.

Ladite unité de contrôle, distante, assure la gestion et le contrôle des systèmes de convoyage, y compris la gestion des trajectoires de guidage des chariots autoguidés sur la surface de roulement, pour assurer l'acheminement d'une unité de stockage depuis un emplacement dans le rack de stockage jusqu' à ladite au moins une station de préparation de commande PC.

Ladite unité de contrôle comporte un ou plusieurs processeurs, une mémoire et un jeu d'instructions configurées pour la mise en oeuvre du procédé de préparation de commande, et en particulier :
- les étapes /A/ et /B/, y compris /B0/, /B1/, B/2/, /B/3/, /B4/ et /B5/ du procédé de préparation de commande, voire également les étapes /C/, /D/ et /E/ et/ou
- les étapes /a0/, /a1/, /a2/, /a3/, /a4/ et /a5/ du procédé de réassort.

La présente divulgation concerne encore un programme informatique comportant des instructions, qui, lorsque ledit programme est exécuté par une unité de contrôle comportant un processeur et une mémoire, assure la mise en oeuvre du procédé de préparation de commande et en particulier :
- les étapes /A/ et /B/, y compris /B0/, /B1/, B/2/, /B/3/, /B4/ et /B5/ du procédé de préparation de commande, voire également les étapes /C/, /D/ et /E/ et/ou
- les étapes /a0/, /a1/, /a2/, /a3/, /a4/ et /a5/ du procédé de réassort.

La présente divulgation concerne encore un support d'enregistrement non transitoire, lisible par ordinateur sur lequel est stocké le programme informatique.

### Nomenclature

- Ra. Rack de stockage,
- CV1. Premier système de convoyage,
- CV2. Deuxième système de convoyage,
- CV3. Troisième système de convoyage,
- SH. Premiers dispositifs de convoyage,
- AC. Deuxièmes dispositifs de convoyage,
- PC. Station de préparation de commande,
- CHR. Chariots autoguidés,
- PT1, PT2. Respectivement premier et deuxième emplacement de transbordement,
- PT. Plateforme (opérateur)
- U. Unités de stockage.

## Revendications

1. Système de préparation de commande comprenant dans un entrepôt :
- une pluralité de racks (Ra) chacun configuré pour recevoir des unités de stockage (U) destinées pour des articles, les racks agencés suivant une pluralité de plans verticaux,
- au moins une zone de préparation de commande (PC) agencée à distance des racks,
- une installation de convoyage configurée pour acheminer une ou plusieurs unités de stockage reçue(s) dans les racks jusqu'à ladite au moins une zone de préparation de commande, suivant un premier sens d'acheminement, ou inversement pour acheminer une ou plusieurs unités de stockage depuis la zone de préparation de commande jusqu'aux racks dans un second sens d'acheminement, ladite installation de convoyage comprenant successivement, suivant le premier sens d'acheminement :
∘ un premier système de convoyage (CV1) qui est agencé dans une allée de rayonnage disposée entre deux racks adjacents, configuré pour acheminer des unités de stockage (U) d'au moins un des deux racks comprenant plusieurs premiers dispositifs de convoyage (SH) agencés, suivant plusieurs hauteurs, lesdits premiers dispositifs étant indépendants les uns des autres pour l'acheminement horizontal d'unités de stockage le long de ladite allée de rayonnage,
∘ un deuxième système de convoyage (CV2), comprenant au moins un deuxième dispositif de convoyage (AC) à déplacement vertical, configuré pour l'acheminement vertical d'unités de stockage, depuis le premier dispositif de convoyage, jusqu'à un troisième système de convoyage suivant le premier sens d'acheminement,
∘ le troisième système de convoyage (CV3) configuré pour l'acheminement d'unités de stockage depuis le deuxième système de convoyage jusqu'à ladite au moins une zone de préparation de commande (PC) suivant le premier sens d'acheminement
**caractérisé en ce que** le troisième système de convoyage comporte une pluralité de chariots autoguidés (CHR), circulant en champ libre sur une surface de roulement de l'entrepôt, lesdits chariots autoguidés comprenant des moyens de roulage configurés pour assurer un déplacement du chariot autoguidé suivant un plan horizontal de la surface de roulement
et dans lequel un système de transfert est configuré pour assurer, d'une part, un transfert de l'unité de stockage (U), suivant le premier sens d'acheminement, depuis ledit au moins un deuxième dispositif de convoyage (AC), alors en une position basse, et l'un des chariots autoguidés (CHR), stationné dans au moins un emplacement de transbordement (PT1, PT2), à proximité du deuxième dispositif de convoyage (AC) et configuré pour assurer, d'autre part, un transfert de l'unité de stockage, suivant le deuxième sens d'acheminement, depuis l'un des chariots autoguidés stationné dans ledit au moins un emplacement de transbordement (PT1, PT2) et jusqu'au deuxième dispositif de convoyage (AC) et dans lequel ledit au moins emplacement de transbordement comprend un premier emplacement de transbordement (PT1) et un deuxième emplacement de transbordement (PT2), agencés de part et d'autre du deuxième dispositif de convoyage (AC) en ladite position basse, et dans lequel ledit système de transfert est configuré pour opérer, sélectivement :
- un transfert de l'unité de stockage entre ledit deuxième dispositif de convoyage (AC), en la position basse, et un premier chariot autoguidé parmi lesdits chariots autoguidés, stationné dans le premier emplacement de transbordement (PT1), en particulier suivant le premier sens d'acheminement ou respectivement le deuxième sens d'acheminement,
- un transfert de l'unité de stockage entre ledit deuxième dispositif de convoyage (AC), en la position basse et un deuxième chariot autoguidé parmi lesdits chariots autoguidés, stationné dans le deuxième emplacement de transbordement (PT2), en particulier suivant le deuxième sens d'acheminement ou respectivement le premier sens d'acheminement.

2. Système selon la revendication 1, dans lequel la surface de roulement est une table de roulement surélevée par rapport :
- à un sol de l'entrepôt sur lequel repose les racks, de sorte que des rails de guidage verticaux dudit au moins un deuxième dispositif de convoyage, s'étendent sous la hauteur de la table de roulement et
- à une surface de soutien tel que le sol pour un opérateur de la station de préparation de commande de sorte qu'une portion de bord de la table, jouxtant la surface de soutien de l'opérateur, autorise un stationnement d'un des chariots autoguidés (CHR) portant une unité de stockage (U) de manière surélevée par rapport à la surface soutien.

3. Système selon la revendication 2, dans lequel la surface de soutien est une plateforme (PT) comportant un mécanisme de réglage en hauteur configuré de manière à autoriser un réglage de différence de niveau entre la table de roulement et la plateforme.

4. Système de préparation de commande selon l'une des revendications 1 à 3 dans lequel le système de transfert est embarqué audit au moins un deuxième dispositif de convoyage (AC), et comprend une partie mobile latéralement configurée pour déployer l'unité de stockage (U) depuis une première position pour laquelle ladite unité de stockage (U) est portée par un support du deuxième dispositif de convoyage (AC), jusqu'à une position en porte-à-faux latéral du support pour laquelle ladite unité de stockage est déplacée au-dessus de l'un des chariots autoguidés stationnés sur ledit au moins un emplacement de transbordement (PT1, PT2).

5. Système de préparation de commande selon l'une des revendications 1 à 4 dans lequel :
- ladite au moins une station de commande comprend plusieurs stations de commande (PC), indépendantes, accessibles par les chariots autoguidés par la surface de roulement,
- ledit au moins un deuxième dispositif de convoyage comporte plusieurs deuxièmes dispositifs de convoyage (AC), indépendants, associés respectivement à plusieurs allées de rayonnage, desservant respectivement les différents racks et dans lequel la surface de roulement et les chariots autoguidés sont configurés pour desservir chacune des stations de préparation commande (PC) à partir d'unités de stockage provenant des différents deuxièmes dispositifs de convoyage (AC).

6. Système de préparation de commande selon l'une des revendications 1 à 5, dans lequel les deuxièmes dispositifs de convoyage (AC) sont exclusivement positionnés en dehors des allées de rayonnage et en dehors des racks de stockage.

7. Système de préparation de commande selon la revendication 6, dans lequel ledit au moins un deuxième dispositif de convoyage (AC) comprend, pour chaque allée de rayonnage, un deuxième dispositif de convoyage (AC) associé aux premiers dispositifs de convoyage (SH) de ladite allée, ledit deuxième dispositif de convoyage (AC) configuré pour circuler suivant une direction verticale, en étant positionné, en dehors de ladite allée de rayonnage, de préférence décalé latéralement par rapport à ladite allée de rayonnage, suivant une direction transversale à ladite allée de rayonnage, et dans lequel chaque premier dispositif de convoyage est configuré pour circuler dans ladite allée jusqu'à une position en dehors de ladite allée de rayonnage, pour laquelle ledit premier dispositif de convoyage (SH) est positionné juxtaposé au deuxième dispositif de convoyage (AC), dans une position de transbordement, et dans lequel le système de préparation de commande comprend un système de transfert, embarqué audit premier dispositif de convoyage (SH) ou audit second dispositif de convoyage (AC) configuré pour autoriser un transfert de ladite unité de stockage (U) depuis le premier dispositif de convoyage (SH) alors dans ladite position de transbordement jusqu'au second dispositif de convoyage (AC) selon la premier sens d'acheminement.

8. Système selon la revendication 6 ou 7, dans lequel la surface de roulement, en particulier le sol ou la table de roulement, s'étend entre les stations de préparation de commande (PC) et les racks de stockage (Ra), exclusivement entre les stations de préparations de commande (PC) et les deuxièmes dispositifs de convoyage (AC) qui sont exclusivement en dehors des racks de stockage (Ra) et des allées de rayonnage, et de sorte que les chariots autoguidés (CHR) sont configurés pour circuler exclusivement en dehors des racks de stockage (Ra) et des allées de rayonnage.

9. Procédé de préparation d'au moins une commande comprenant un ou plusieurs articles mettant en oeuvre un système de préparation de commande selon l'une des revendications 1 à 8, le procédé comprenant :
- /A/ sélectionner une ou plusieurs unités de stockage (U), parmi les unités de stockage reçue(s) dans les racks, la ou lesdites unités de stockage contenant le ou les articles de ladite au moins une commande,
- /B/ acheminer la ou lesdites unités de stockage sélectionnées jusqu'à ladite au moins une zone de préparation de commande suivant le premier sens d'acheminement, par :
- /B0/ Transfert de l'unité de stockage depuis un emplacement de stockage dans le rack jusqu'à un des premiers dispositifs de convoyage (SH),
- /B1/ convoyage selon un acheminement horizontal de ladite unité de jusqu'au deuxième système de convoyage, par déplacement du premier dispositif de convoyage (SH),
- /B2/ transfert de l'unité de stockage depuis le premier dispositif de convoyage (SH) jusqu'au deuxième dispositif de convoyage (AC)
- /B3/ convoyage selon un acheminement vertical de ladite unité de stockage par le déplacement du deuxième dispositif de convoyage (AC), jusqu'à une position basse,
- /B4/ transfert de l'unité de stockage depuis le deuxième dispositif de convoyage jusqu'à l'un des chariots autoguidés,
- /B5/ convoyage de ladite unité de stockage jusqu'à ladite au moins la zone de préparation (PC) de commande, par déplacement en champ libre du chariot autoguidé (CHR),
et dans lequel en /B4/ le transfert de l'unité de stockage jusqu'audit chariot autoguidé s'opère alors que ledit chariot est stationné dans ledit premier emplacement de transbordement (PT1), et alors qu' un autre des chariots autoguidés portant une autre unité de stockage est stationné dans le deuxième emplacement de transbordement (PT2), le procédé comprenant successivement à /B4/, le transfert de ladite autre unité de stockage depuis le deuxième emplacement de transbordement (PT2) jusqu'au deuxième dispositif de convoyage maintenu en position basse, et ledit retour de ladite autre unité de stockage dans l'un des emplacements de réception du rack par convoyage selon un acheminement vertical du deuxième dispositif de convoyage (AC), suivi du convoyage selon un acheminement horizontal de l'un des premiers dispositifs de convoyage (SH), ledit système comportant un système de transfert, embarqué au premier dispositif de convoyage (SH) ou au deuxième dispositif de convoyage, configuré pour assurer un transfert de l'unité de stockage (U) depuis le premier dispositif de convoyage (SH) jusqu'au deuxième dispositif de convoyage (AC).

10. Procédé selon la revendication 9, comprenant une pluralité de commandes en cours de préparation, le procédé comprenant
- ICI identifier informatiquement des articles communs parmi les commandes en cours de préparation, contenus dans une unité de stockage, commune auxdites commandes en cours de préparation, y compris une première commande, et une commande ultérieure à la première commande, et après le convoyage selon /B5/ du chariot autoguidé portant l'unité de stockage commune jusqu'à une zone de préparation de commande pour la préparation de la première commande,
- /D/ mettre en attente le chariot autoguidé transportant l'unité de stockage commune dans une zone d'attente ménagée dans ou à proximité de la zone de préparation, sans retourner l'unité de stockage au rack, de manière à libérer ladite zone de préparation pour réception d'au moins une autre unité de stockage convoyée selon /B5/ par un autre des chariots autoguidés, ladite au moins une autre unité de stockage étant nécessaire à la préparation de la première commande voire d'une deuxième commande,
- /E/ retourner le chariot autoguidé portant ladite unité de stockage commune depuis la zone d'attente jusqu'à la zone de préparation de commande, pour la préparation de la commande ultérieure.

11. Système de préparation de commande selon l'une revendications 1 à 8, dans lequel les chariots autoguidés sont équipés chacun d'un module de communication, configuré recevoir et transmettre des données avec une unité de contrôle distante, informatique, de manière sans fil, et dans lequel ladite unité de contrôle, distante, assure la gestion et le contrôle des systèmes de convoyage, y compris la gestion des trajectoires de guidage des chariots autoguidés sur la surface de roulement, pour assurer l'acheminement d'une unité de stockage depuis un emplacement de stockage dans le rack de stockage jusqu' à ladite au moins une station de préparation de commande (PC), ladite unité de contrôle comporte un ou plusieurs processeur, une mémoire et un jeu d'instructions configurées pour la mise en oeuvre du procédé de préparation de commande selon l'une des revendications 9 ou 10.
